# EUROPÄISCHE PATENTSCHRIFT

(11) **EP 0 666 207 B1**
(45) Veröffentlichungstag und Bekanntmachung des Hinweises auf die Patenterteilung: **05.03.1997**
(21) Anmeldenummer: 94119223.9
(22) Anmeldetag: 06.12.1994
(51) Int. Cl.: B60T 13/74, B61H 13/20

(54) **Elektromechanische Zuspannvorrichtung für Reibungsbremsen**
Electromechanical actuator for friction brakes
Actionneur électromécanique pour freins à friction

(30) Priorität: 07.02.1994 DE 4403738
(43) Veröffentlichungstag der Anmeldung: 09.08.1995
(73) Patentinhaber: Knorr-Bremse Systeme für Schienenfahrzeuge GmbH, 80809 München (DE)
(72) Erfinder: Fuderer, Erich, D-82110 Germering (DE); Bartlechner, Manfred, D-82234 Wessling (DE); Staltmeir, Josef, D-80907 München (DE); Kerscher, Albert, D-85386 Eching (DE)

(56) Entgegenhaltungen:
- EP-A- 0 166 156
- EP-A- 0 283 947
- DE-A- 4 035 045

## Beschreibung

Die Erfindung betrifft eine elektromechanische Zuspannvorrichtung für Reibungsbremsen von Fahrzeugen, insbesondere Schienenfahrzeugen, mit den im Gattungsbegriff des Patentanspruches 1 genannten Merkmalen.

Eine Zuspannvorrichtung dieser Art ist aus der DE-PS 37 09 952 (EP-A-0 283 947) bekannt. Bei dieser ist die gegebenenfalls mehrfach vorgesehene Meßvorrichtung im Kopfteil des Betätigungsstößels und/oder in Anlenklagern von Bremsbacken an den Bremszangenhebeln angeordnet, sie muß daher während Bremsungen den Bremshüben entsprechende Hubbewegungen ausführen, wodurch die Signalübertragung erschwert ist. Außerdem kann die Zugänglichkeit der Meßeinrichtung im Kopfteil des Betätigungsstößels erschwert, die Temperatur- und Verschmutzungsbelastung der Meßeinrichtung an den Bremsbacken hoch sein; zudem wird die Meßeinrichtung stets von der vollen Zuspannkraft durchsetzt und muß dementsprechend robust ausgebildet sein.

Es ist üblich, eine Zuspannvorrichtung, die nur in eine Löse- oder eine von zwei Bremsstufen einstellbar ist, als zweistufig zu bezeichnen; eine Zuspannvorrichtung, die eine vielstufig oder kontinuierlich regelbare Bremszuspannung ermöglicht, wird demgegenüber als vielstufig oder analog bezeichnet.

Es ist Aufgabe der Erfindung, eine Zuspannvorrichtung der eingangs genannten Art in einfacher Weise derart auszubilden, daß die Meßeinrichtung keine den Bremshüben entsprechende Bewegungen ausführen muß, vielmehr ortsfest anordenbar ist, wodurch die Signalübertragung wesentlich erleichtert wird. Außerdem sollen die Möglichkeiten geboten werden, bei Bedarf die Meßeinrichtung an einem vor übermäßigen Temperaturen und Verschmutzungen gut schützbaren Ort und/oder höchstens von einem Teil der Zuspannkraft durchsetzt anordnen zu können.

Diese Aufgabe wird für eine Zuspannvorrichtung der eingangs genannten Art gemäß der Erfindung durch eine Ausbildung entsprechend den im kennzeichnenden Teil des Anspruches 1 genannten Merkmalen gelöst. In den Unteransprüchen sind weitere, gemäß der Erfindung vorteilhafte Ausbildungsmöglichkeiten für eine derartige Zuspannvorrichtung aufgezeigt.

In den Zeichnungen sind vorteilhafte Ausführungsbeispiele für nach der Erfindung ausgebildete Zuspannvorrichtungen schematisch dargestellt, und zwar zeigen
- Fig 1: ein erstes Ausführungsbeispiel;
- Fig 2 bis 4: drei unterschiedliche Ausführungsbeispiele für eine Einzelheit, nämlich den Drehhebel mit dessen federnder Drehbelastung; und
- Fig 5: ein weiteres Ausführungsbeispiel.
Gleiche oder einander entsprechende Teile sind in den Fig. mit gleichen Bezugszeichen bezeichnet.

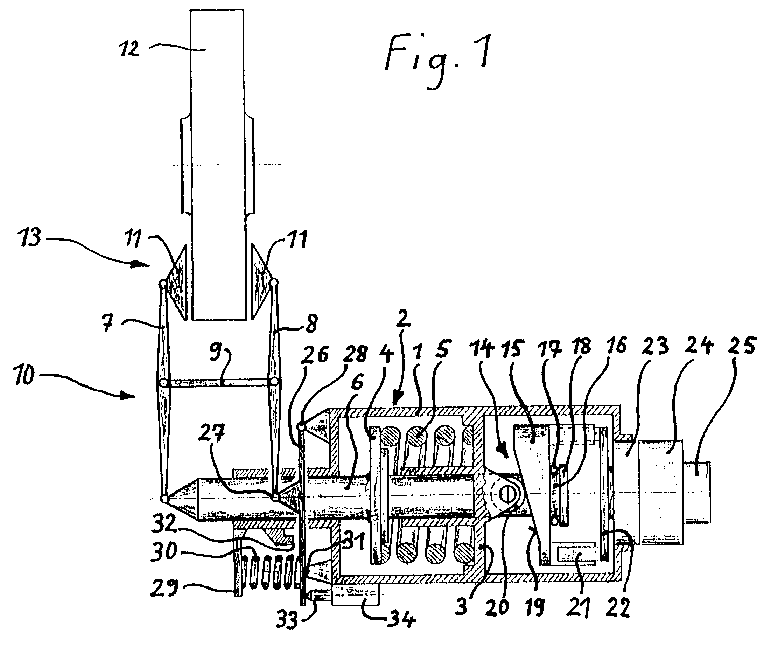

Die zweistufig ausgebildete Zuspannvorrichtung nach Fig. 1 weist ein Gehäuse 1 für einen Federspeicher 2 auf, welcher eine einerseits gegen eine Gehäusewandung 3 und andererseits gegen einen Federteller 4 abgestützte Speicherfeder 5 beinhaltet. Der Federteller 4 ist auf einem Betätigungsstößel 6 gehaltert, welcher am Gehäuse 1 axialverschieblich gelagert und an seinem aus dem Gehäuse 1 ins Freie ragenden Ende an einem Ende eines ersten Bremszangenhebels 7 angelenkt ist. Der Bremszangenhebel 7 bildet zusammen mit einem zweiten Bremszangenhebel 8 und einer die beiden Bremszangenhebel 7 und 8 in deren mittleren Bereich miteinander verbindenden Zugstange 9 eine Bremszange 10; die beiden Bremszangenhebel 7 und 8 verlaufen in einer Ebene etwa rechtwinklig zum Betätigungsstößel 6 und zumindest annähernd parallel zueinander. An den dem Betätigungsstößel 6 abgewandten Enden sind an den Bremzangenhebeln 7 und 8 Bremsbacken 11 angelenkt, zwischen welche eine Bremsscheibe 12 eingreift; die Bremszange 10 bildet zusammen mit den Bremsbacken 11 und der Bremsscheibe 12 eine eine Reibungsbremse 13 darstellende Scheibenbremse.

Anschließend an die Gehäusewandung 3 befindet sich im Gehäuse 1 ein Getriebe 14 mit einem Drehkeil 15, der drehbar auf einer die Gehäusewandung 3 durchsetzenden Verlängerung 16 des Betätigungsstößels 6 gelagert und auf seiner der Gehäusewandung 3 abgewandten Seite über ein Axiallager 17 gegen einen Ringflansch 18 am Ende der Verlängerung 16 axial abgestützt ist. Andererseits trägt der Drehkeil 15 zueinander symmetrisch versetzt zwei als Spiralflächen ausgebildete Keilflächen 19, welche gegen je eine Rolle 20 anliegen; die Rollen 20 sind an der Gehäusewandung 3 drehbar gelagert. Das Getriebe 14 vermag somit Drehbewegungen des Drehkeiles 15 in Axialbewegungen des Betätigungsstößels 6 bzw umgekehrt umzusetzten.

Der Drehkeil 15 ist nahe seines radial äußeren Randes vermittels einer Axialverschiebungen ermöglichenden Klauenkupplung 21 mit einer Antriebsscheibe 22 drehgekoppelt, die drehbar und im wesentlichen axial unverschieblich gelagert und über ein Untersetzungsgetriebe 23 von einem Elektromotor 24 antreibbar ist; vermittels einer elektrisch betätigbaren Bremse 25 ist die Antriebbsscheibe 22 abbrems- und feststellbar. Die Speicherfeder 5, der Betätigungsstößel 6, der Drehkeil 15, das Untersetzungsgetriebe 23, der Elektromotor 24 und die Bremse 25 sind zueinander gleichachsig angeordnet, bei geänderter Getriebeausführung können insbesondere hinsichtlich des Elektromotors und/oder der Bremse auch ungleichachsige Anordnungen vorgesehen sein.

Das dem Betätigungsstößel 6 benachbarte Ende des zweiten Bremshebels 8 ist gegabelt ausgeführt, übergreift den Betätigungsstößel 6 und ist seitlich zu diesem am mittleren Bereich eines Drehhebels 26 vermittels einer Anlenkung 27 angelenkt. Der Drehhebel 26 verläuft in einer die Ebene der Bremszange 10 etwa rechtwinklig schneidenden Ebene, gemäß dem Ausführungsbeispiel etwa parallel zu den Bremszangenhebeln 7 und 8. Das eine Ende des Drehhebels 26 ist vermittels einer am Gehäuse 1 befindlichen, festen Lagerstelle 28 um eine in seiner Ebene liegende und zu seiner Längserstreckung rechtwinklige Drehachse drehbar gelagert, nahe des anderen Endes ist zwischen den Drehhebel 26 und einem am Gehäuse 1 gehalterten Widerlager 29 eine Feder 30 eingespannt. Die Feder 30 wirkt dabei derart auf den Drehhebel 26, daß dieser über die Anlenkung 27 die Bremszange 10 in Zuspannrichtung belastet. Nahe der Feder 30 stehen dem Drehhebel 26 beidseitig mit geringem Abstand je ein fester, am Gehäuse 1 gehalterter Anschlag 31 bzw. 32 gegenüber, welche die Drehfreiheit des Drehhebels um die Lagerstelle 28 begrenzen; der Anschlag 32 ist, bezogen auf den Drehhebel 26, gleichseitig zur Feder 30 und der Anschlag 31 der Feder 30 gegenüberliegend angeordnet. Am freien Ende des Drehhebels 26 greift der Schaltstößel 33 eines elektrische Schalters 34 an, der am Gehäuse 1 befestigt ist. Der Schalter 34 ist derart ausgebildet, daß er zumindest ein Signal bei Drehen des Drehebels 26 entgegen dessen Drehbelastung durch die Feder 30 abgibt; der Drehhebel 26 ist hierbei von einem der Kraft der Feder 30 proportionalen Drehmoment belastet, welches nur durch seine Anlenkung 27 am Bremszangenhebel 8 einleitbar ist und somit einer bestimmten, bei der zweistufigen Zuspannvorrichtung der ersten Bremsstufe entsprechenden Zuspannkraft der Bremszange 10 proportional ist. Die Feder 30 stellt also eine Meßfeder einer Meßvorrichtung dar, welche vermittels des Schalters 34 bei einer bestimmten, in der Bremszange 10 wirkenden Zuspannkraft ein Signal abgibt.

Die Zuspannvorrichtung nach Fig.1 und deren Teile nehmen im gelösten Zustand der Reibungsbremse 13 die aus der Fig.1 ersichtlichen Lagen ein, lediglich die Rollen 20 befinden sich nahe des in Spannrichtung für die Speicherfeder 5 liegenden Endes auf der Keilfläche 19, in Fig.1 sind sie dagegen einer ersten Bremsstufe entsprechend im mittleren Teil der Keilfläche 19 anliegend gezeichnet. Die Speicherfeder 5 belastet den Betätigungsstößel 6, der in dieser Belastungsrichtung über den Ringflansch 18, das Axiallager 17, den über die Klauenkupplung 21 von der betätigten Bremse 25 undrehbar gehaltenen Drehkeil 15 und die Rollen 20 unverschieblich gegen das Gehäuse 1 abgestützt ist. Die Feder 30 hält den Drehhebel 26 in Anlage am Anschlag 31 und die Anlenkungen der Bremszangenhebel 7 und 8 am Betätigungsstößel 6 bzw. dem Drehhebel 26 halten die Reibungsbremse 13 gelöst.

Zum Einbremsen wird die Bremse 25 gelöst, was beispielsweise durch Entregen bewirkt werden kann. Der Drehkeil 15 wird hierduch drehfrei und beginnt sich in Ablaufrichtung der Rollen 20 auf den Keilflächen 19 unter der Kraft der Speicherfeder 5 zu drehen, wobei der Elektromotor 24 gegebenenfalls mitrotiert; durch einen geeigneten Freilauf kann dieses Mitrotieren vermieden werden. Der Betätigungsstößel 6 wird hierbei von der Speicherfeder 5 mitsamt dem Drehkeil 15 nach links verschoben, wobei die Bremszange 10 zugespannt und die Reibungsbremse 13 betätigt wird. Erst bei Erreichen einer bestimmten, der ersten Bremsstufe entsprechenden Zuspannkraft übt der Bremszangenhebel 8 auf den Drehhebel 26 eine Kraft aus, die ausreicht, diesen entgegen der Kraft der Feder 30 unter Abheben vom Anschlag 31 bis zur Anlage am Anschlag 32 zu drehen, wobei der Schalter 34 wie vorstehend bereits beschrieben ein Signal abgibt. Dieses Signal zeigt das Zuspannen der Reibungsbremse 13 mit der bestimmten Zuspannkraft an und wird über eine nicht dargestellte, elektrische Schaltvorrichtung zum Wiedereinbremsen der Bremse 25 genutzt. Der Drehkeil 15 wird nun wieder drehfest gehalten und blockiert ein weiteres Verschieben des Betätigungsstößels 6, wodurch die Bremszange 10 und die Reibungsbremse 13 mit dem vorgegebenen Sollwert entsprechend der ersten Bremsstufe zugespannt gehalten werden.

Durch Lösen der Bremse 25 kann der Einbremsvorgang bis zum Erreichen einer maximalen Bremsung, der zweiten Bremsstufe, fortgesetzt werden; die Speicherfeder kann hierbei ihre ganze Federkraft als Zuspannkraft abgeben.

Zum nachfolgenden Lösen der Reibungsbremse 13 wird über die erwähnte Schaltvorrichtung bei gelöster Bremse 25 der Elektromotor 24 eingeschaltet, wodurch über das Untersetzungsgetriebe 23 und die Klauenkupplung 21 der Drehkeil 15 in Auflaufrichtung der Rollen 20 auf die Keilflächen 19 gedreht wird. Der Drehkeil 15 wird hierbei nach rechts verschoben und nimmt vermittels des Axiallagers 17 und des Ringflansches 18 den Betätigungsstößel 6 mit. Dabei wird die Speicherfeder 5 über den Federteller 4 wieder gespannt und die Bremszange 10 wird entspannt, wodurch die Feder 30 den Drehhebel 26 unter Rückschalten des Schalters 34 zur Anlage am Anschlag 31 zurückdreht; die Reibungsbremse 13 gelangt dabei in den gelösten, dargestellten Zustand zurück. Zum Abschluß des Lösevorganges wird der Elektromotor 24 wieder abgeschaltet und die Bremse 25 eingelegt. Im vorbeschriebenen Ausführungsbeispiel verläuft der Drehhebel 26 etwa parallel zum Bremszangenhebel 8; er kann jedoch auch in seiner vorerwähnten Ebene gedreht, beispielsweise den Bremszangenhebel 8 rechtwinklig überkreuzend, angeordnet werden. Auch müssen die Lagerstelle 28 und /oder der Schalter 34 nicht am Gehäuse 1, sondern können an anderweitigen festen, nicht dargestellten Bauteilen gehaltert sein.

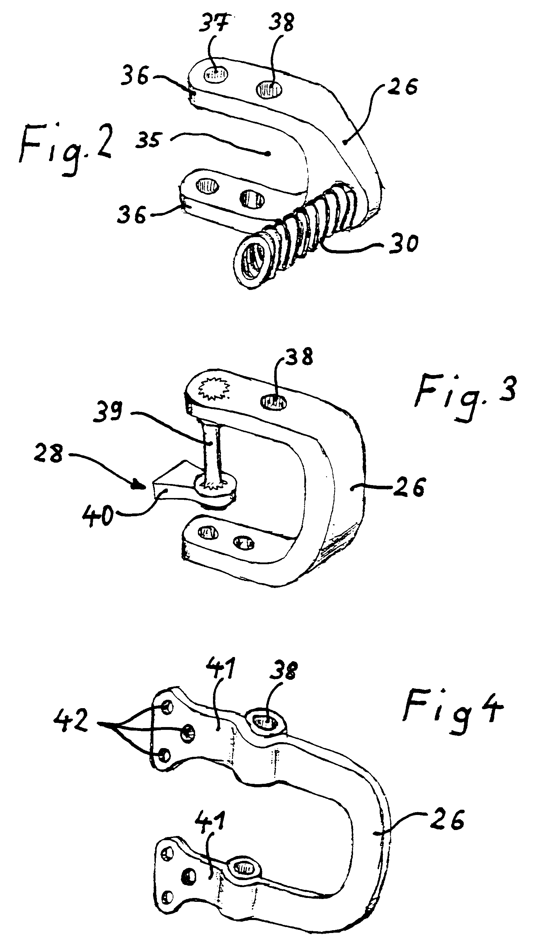

Der Drehhebel 26 überkreuzt gemäß dem dargestellten Ausführungsbeispiel den Betätigungsstößel 6, es ist daher zweckmäßig, ihn gegabelt wie in Fig.2 dargestellt auszubilden. Der Betätigungsstößel 6 - in Fig.2 nicht eingezeichnet - durchgreift dabei die Öffnung 35 zwischen den beiden Gabelschenkeln 36 des Drehhebels 26, welche Bohrungen 37 bzw. 38 zur Aufnahme nicht dargestellter Anlenkbolzen zur Anlenkung an der Lagerstelle 28 bzw. der Anlenkung 27 nach Fig.1 aufweisen. Auch die Feder 30 ist in Fig.2 dargestellt, sie ist dort als Schraubendruckfeder ausgebildet, es wäre aber auch eine Tellerfeder oder dergl. verwendbar.

Bei der geänderten Ausführung nach Fig.3 ist der Drehhebel ähnlich zu Fig.2 ausgebildet, lediglich die Feder 30 ist durch eine in die Lagerstelle 28 integrierte Drehfeder 39 ersetzt. Die Drehfeder 39 ist als Drehfederstab ausgebildet, welcher einerseits an der Stelle 40 fest gehaltert und andererseits am Drehhebel 26 befestigt ist.

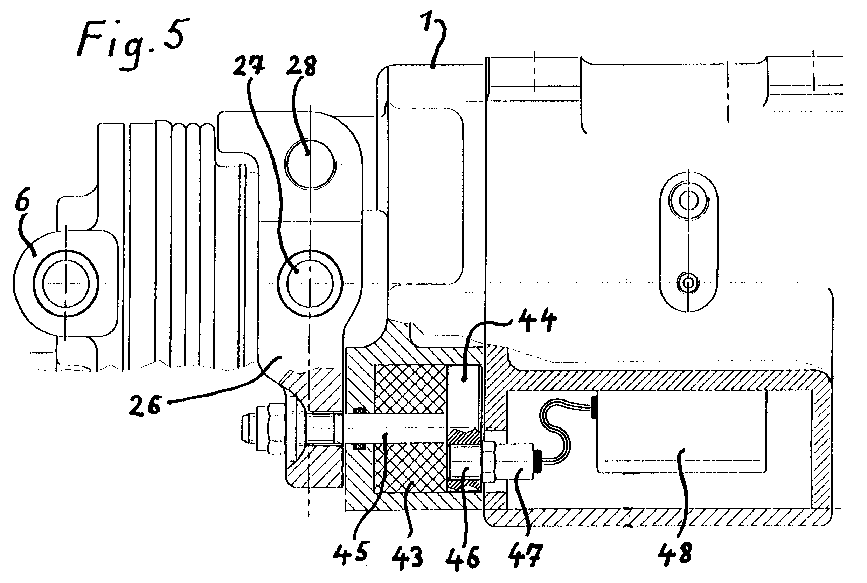

Weiterhin ist es in weiterer Änderung gemäß Fig.4 möglich, den Drehebel 26 zumindest in seinem der Lagerstelle 28 nahen Bereich als Blattfeder 41 auszubilden und an seinem Ende fest, beispielsweise mittels Verschraubungen 42 zum Gehäuse 1, zu haltern: Der Blattfederbereich ergibt dabei die federnde Auslenkbarkeit des Drehhebels 26.

Bei allen Ausführungsformen wirkt der Drehhebel 26 als Übersetzungshebel, derart, daß bei nur geringer, hinsichtlich der Speicherfeder 5 einen Verlusthub wirkender Verlagerung der Anlenkung 27 am Schalter 34 ausreichende Schaltwege auftreten.

In weiterer Abänderung ist es möglich, den Drehhebel 26 nicht als einarmigen Hebel, sondern unter Vertauschen von Anlenkung 27 und Lagerstelle 28 zweiarmig auszubilden, auch kann die Angriffsstelle des Schalters 34 verlagert werden.

Nach den vorstehend beschriebenen Ausführungen ist die Zuspannvorrichtung zweistufig; sie kann jedoch auch mehrstufig oder analog wirkend ausgebildet werden. Hierzu ist die Feder 30 so hart auszulegen, daß sie bei zweckmäßig etwas vergrößertem Drehspiel des Drehhebels 26 zwischen den Anschlägen 31 und 32 diesen nur bei gelöster Reibungsbremse am einen und bei maximal betätigter Reibungsbremse am anderen Anschlag 31 bzw. 32 anlegen läßt, ansonsten in bestimmten Zwischenlagen zwischen diesen Anschlägen 31 und 32 hält. Anstelle des Schalters 34 ist dann ein Hubsensor vorzusehen, der die jeweilige Stellung des freien Endes des Drehhebels 26 sensiert und entsprechende Signale abgibt; als Hubsensor kann ein vielstufiger Schalter oder Schiebewiderstand oder dergl. vorgesehen sein. Die Anschläge 31 und 32 können hierbei als Endanschläge dienen.

In Abänderung hierzu kann es für eine mehrstufige bzw. analoge Ausbildung wie in Fig.5 dargestellt besonders zweckmäßig sein, die Meßvorrichtung als Kraftsensor mit einem im Gehäuse 1 angeordneten, allseitig von Wandungen umschlossenen Gummikissen 43 auszubilden, wobei lediglich die dem Drehebel 26 abgewandte Wandung 44 kolbenartig verschieblich, die anderen Wandungen fest ausgebildet sind. Die verschiebliche Wandung 44 ist mittels eines das Gummikissen 43 durchsetzenden Zugankers 45 am freien Ende des Drehhebels 6 angelenkt, derart, daß er diesen entgegen seiner Belastung durch Zuspannkräfte in der Bremszange 10 zu belasten vermag. An dem Gummikissen 43 liegt das Ende eines Taststößels 46 an, der einem am Gehäuse 1 gehalterten Kraftsensor 47 zugehört. Die Anlagefläche des Taststößels 46 ist wesentlich kleiner als die Fläche der verschieblichen Wandung 44. Die Meßsignale des Drucksensors 47 werden einer Schaltvorrichtung bzw. Regelelektronik 48 zugeführt und dort verarbeitet.

Bei dieser Ausführungsform erhält das Gummikissen 43 über den Zuganker 45 und die verschiebliche Wandung 44 eine der jeweiligen Zuspannkraft der Bremszange 10 entsprechende Druckbelastung, welche auch den Taststößel 46 belastet; die von der Wandung 44 auf das Gummikissen 43 übertragene, der Zuspannkraft proportionale Kraft ist dabei um das Flächenverhältnis zwischen dieser Wandung 44 und der Anlagefläche des Taststößels 46 größer als die auf den Taststößel 46 wirkende Kraft. Beim Bremsen führt der Drucksensor 47 somit der Regelelektronik 48 der jeweiligen Zuspannkraft entsprechende Signale zu, so daß diese durch geeignete Ansteuerung von Bremse 25 und Elektromotor 24 die Zuspannkraft in gewünschter Weise zu steuern und regeln vermag. Das Gummikissen 43 muß nicht aus Gummi, es kann aus einem andersartigen Elastomer bestehen.

Es ist ersichtlich, daß bei allen Ausführungsformen die Meßvorrichtung ortsfest am Gehäuse 1 und relativ gut geschützt anordenbar ist, wobei sie zudem nur von reinen Schaltkräften (Schalter 34) oder zu den Zuspannkräften der Bremszange 10 untersetzten, relativ kleinen Kräften (Drucksensor 47) belastbar ist.

### Kurzfassung:

Bei einer elektromechanischen Zuspannvorrichtung für Reibungsbremsen (13) von insb. Schienenfahrzeugen, die einen durch einen Elektromotor (24) über ein Getriebe (14) spannbaren Federspeicher (2) zum Zuspannen einer Bremszange (10) aufweist, ist der Bremszangen-Festpunkt als Anlenkung (27) an einem Drehhebel (26) ausgebildet. Der Drehhebel (26) ist einerseits an einer festen Lagerstelle (28) angelenkt, andererseits ist er von einer Feder (30) in Zuspannrichtung der Bremszange (10) und Anlegerichtung an einen Anschlag (31) belastet. Ein andersseitiger, zweiter Anschlag (32) steht dem Drehhebel (26) mit geringem Abstand gegenüber. Das freie Ende des Drehebels ist mit einem feststehenden Schalter (34) gekoppelt.

Sobald die Zuspannkraft der Bremszange (10) einen bestimmten Sollwert erreicht, wird der Drehhebel (26) entgegen seiner Federbelastung bis zur Anlage am zweiten Anschlag (32) gedreht, wobei er den Schalter (34) schaltet und das Erreichen des Sollwertes signalisiert.

Die Zuspannvorrichtung ist zweistufig, mehrstufig oder ananlog ausbildbar.

| Liste der Bezugszahlen | | | | | |
|---|---|---|---|---|---|
| 1 | Gehäuse | 2 | Federspeicher | 3 | Gehäusewandung |
| 4 | Federteller | 5 | Speicherfeder | 6 | Betätigungsstößel |
| 7 | Bremszangenhebel | | - | 8 | Bremszangenhebel |
| 9 | Zugstange | 10 | Bremszange | 11 | Bremsbacke |
| 12 | Bremsscheibe | 13 | Reibungsbremse | 14 | Getriebe |
| 15 | Drehkeil | 16 | Verlängerung | 17 | Axiallager |
| 18 | Ringflansch | 19 | Keilfläche | 20 | Rolle |
| 21 | Klauenkupplung | | - | 22 | Antriebsscheibe |
| 23 | Untersetzungsgetriebe | | - | 24 | Elektromotor |
| 25 | Bremse | 26 | Drehhebel | 27 | Anlenkung |
| 28 | Lagerstelle | 29 | Widerlager | 30 | Feder |
| 31 | Anschlag | 32 | Anschlag | 33 | Schaltstößel |
| 34 | Schalter | 35 | Öffnung | 36 | Gabelschenkel |
| 37 | Bohrung | 38 | Bohrung | 39 | Drehfeder |
| 40 | Stelle | 41 | Blattfeder | 42 | Verschraubung |
| 43 | Gummikissen | 44 | Wandung | 45 | Zuganker |
| 46 | Taststößel | 47 | Drucksensor | 48 | Regelelektronik |

## Patentansprüche

1. Elektromechanische Zuspannvorrichtung für Reibungsbremsen (13) von Fahrzeugen, insbesondere Schienenfahrzeugen, mit einem vermittels eines Elektromotors (24) über ein Dreh- in Axialbewegungen umsetzendes Getriebe (14) spannbaren, axialen Federspeicher (2) und einer von dessen Federkraft zuspannbaren Bremszange (10) mit zwei Bremszangenhebeln (7;8), wobei das Betätigungsende des einen Bremszangenhebels (7) mit einem Betätigungsstößel (6) des Federspeichers (2) gekoppelt und das Betätigungsende des zweiten Bremszangenhebels (8) gegen ein Festlager abstützbar ist, und mit einer Meßvorrichtung für die an der Reibungsbremse (13) anstehende Zuspannkraft,
dadurch gekennzeichnet,
daß das Betätigungsende des zweiten Bremzangenhebels (8) an einem Drehhebel (26) angelenkt ist, der in einer die Ebene der Bremszange (10) etwa rechtwinklig schneidenden Ebene verläuft, der versetzt zu dieser Anlenkung (27) um eine zumindest annähernd in seiner Ebene liegende, zu seiner Längserstreckung rechtwinklige Achse begrenzt drehbar an einer festen Lagerstelle (28) gehaltert ist, der in Drehrichtung entgegengesetzt zum vom Bremszangenhebel (8) durch die Zuspannkraft auf ihn ausübbaren Drehmoment federnd drehbelastet ist und welcher versetzt zur Lagerstelle (28) mit einer bei seinem Drehen um die Lagerstelle (28) ein Signal abgebenden Meßvorrichtung (33,34) gekoppelt ist.

2. Zuspannvorrichtung nach Anspruch 1, dadurch gekennzeichnet, daß sich die Anlenkung (27) des Bremszangenhebels (8) im mittleren Bereich der Längserstreckung des Drehhebels (26), die feste Lagerstelle (28) nahe dessen einem Ende und die Ankoppelung der Meßvorrichtung (33,34) nahe dessen anderem Ende befinden.

3. Zuspannvorrichtung nach Anspruch 2, dadurch gekennzeichnet, daß dem Drehhebel (26) versetzt zur Lagerstelle (28) beidseitig je ein fester, Drehbewegungen um die Lagerstelle (28) begrenzender Anschlag (31;32) gegenübersteht, daß die Anschläge (31;32) sich im Bereich zwischen der Anlenkung (27) des Bremszangenhebels (8) und dem anderen Ende des Drehhebels (26) befinden und daß die feste Lagerstelle (28) und die Anschläge (31;32) am Gehäuse (1) des Federspeichers (2) angeordnet sind.

4. Zuspannvorrichtung nach Anspruch 3, dadurch gekennzeichnet, daß bei deren zweistufiger Ausbildung die Meßvorrichtung als beim Drehen des Drehhebels 26 entgegen dessen federnder Drehbelastung schaltender Schalter (34) ausgebildet ist.

5. Zuspannvorrichtung nach Anspruch 2 oder 3, dadurch gekennzeichnet, daß bei deren vielstufiger bzw. analoger Ausbildung die Meßvorrichtung als Hubsensor ausgebildet ist, wobei die federnde Drehbelastung als Meßfeder-Kraft dient.

6. Zuspannvorrichtung nach Anspruch 2 oder 3, dadurch gekennzeichnet, daß bei deren vielstufiger bzw. analoger Ausbildung die Meßvorrichtung als Kraftsensor ausgebildet ist, welcher die federnde Drehbelastung in Stärke einer Kompensation des vom Bremszangenhebel (8) ausgeübten Drehmomentes auf den Drehhebel (26) ausübt.

7. Zuspannvorrichtung nach einem der Ansprüche 4, 5 oder 6, dadurch gekennzeichnet, daß zum federnden Drehbelasten des Drehhebels (26) etwa im Bereich der Anschläge (31;32) zwischen dem Drehhebel (26) und einem am Gehäuse (1) des Federspeichers (2) gehalterten Widerlager (29) eine Feder (30) eingespannt ist.

8. Zuspannvorrichtung nach einem der Ansprüche 4, 5 oder 6, dadurch gekennzeichnet, daß zum federnden Drehbelasten des Drehhebels (26) sich im Bereich der festen Lagerstelle (28) eine den Drehhebel (26) belastende Drehfeder (39) befindet.

9. Zuspannvorrichtung nach einem der Ansprüche 4,5 oder 6, dadurch gekennzeichnet, daß zum federnden Drehbelasten des Drehhebels (26) dieser zumindest in seinem der Anlenkung an der festen Lagerstelle (28) nahen Bereich als an ihrem freien Ende fest mit dein Gehäuse (1) des Federspeichers (2) verbundene Blattfeder (41) ausgebildet ist.

10. Zuspannvorrichtung nach Anspruch 6, dadurch gekennzeichnet, daß der Kraftsensor ein allseitig von Wandungen umschlossenes Gummikissen (43) aufweist, wobei eine Wandung (44) in Kompressionsrichtung des Gummikissens (43) mit dem Drehhebel (26) gekoppelt ist und wobei an dem Gummikissen (43) ein Taststößel (46) eines Drucksensors (47) anliegt, dessen Anlagefläche kleiner als die Fläche der einen Wandung (44) ist.

11. Zuspannvorrichtung nach einem oder mehreren der vorstehenden Ansprüche, dadurch gekennzeichnet, daß der Drehhebel (26) U-artig ausgebildet und den Betätigungsstößel (6) quer übergreifend angeordnet ist.

## Claims

1. Electro-mechanical clamping device for friction brakes (13) of vehicles, in particular rail vehicles, having axial spring-loading means (2) which can be actuated by means of an electric motor (24) via a gear unit (14) converting rotary movements into axial movements, and a brake caliper (10), actuatable by its spring force and having two brake caliper levers (7; 8), the actuation end of one brake caliper lever (7) being coupled to an actuation ram (6) of the spring-loading means (2), and the actuation end of the second brake caliper lever (8) being supportable against a fixed bearing, and having a measuring device for the clamping force occurring on the friction brake (13),
characterised in that
the actuation end of the second brake caliper lever (8) is pivoted on a rotary lever (26) which extends in a plane intersecting the plane of the brake caliper (10) approximately at right angles, which is mounted at a fixed bearing point (28) with an offset to this pivot point (27) with the capacity for limited rotation about an axis lying at least approximately in its plane and at right angles to its longitudinal extent, which, in the direction of rotation, is resiliently loaded to rotate in opposition to the torque which can be exerted on it from the brake caliper lever (8) by the clamping force, and which, offset to the bearing point (28), is coupled to a measuring device (33, 34) emitting a signal as the lever rotates about the bearing point (28).

2. Clamping device according to claim 1, characterised in that the pivot (27) of the brake caliper lever (8) is located in the middle region of the longitudinal extent of the rotary lever (26), the fixed bearing point (28) near its one end and the coupling of the measuring device (33, 34) near its other end.

3. Clamping device according to claim 2, characterised in that on both sides of the rotary lever (26), offset to the bearing point (28), a respective fixed stop (31; 32) faces the lever, restricting rotary movements about the bearing point (28), in that the stops (31; 32) are located in the region between the pivot (27) of the brake caliper lever (8) and the other end of the rotary lever (26), and in that the fixed bearing point (28) and the stops (31; 32) are arranged on the housing (1) of the spring-loading means (2).

4. Clamping device according to claim 3, characterised in that the measuring device is of two-stage construction designed as a switch (34) switching as the rotary lever (26) rotates counter to its resilient rotary loading.

5. Clamping device according to claim 2 or 3, characterised in that the measuring device is of multi-stage or analog construction designed as a stroke sensor, the resilient rotary loading being used as the spring measuring force.

6. Clamping device according to claim 2 or 3, characterised in that the measuring device is of multi-stage or analog construction designed as a force sensor, which exerts the resilient rotary loading to the strength of a compensation of the torque exerted by the brake caliper lever (8) on the rotary lever (26).

7. Clamping device according to one of claims 4, 5 or 6, characterised in that for the resilient rotary loading of the rotary lever (26) a spring (30) is clamped approximately in the region of the stops (31; 32) between the rotary lever (26) and an abutment (29) held on the housing (1) of the spring-loading means.

8. Clamping device according to one of claims 4, 5 or 6, characterised in that for the resilient rotary loading of the rotary lever (26) a torsion spring (39) loading the rotary lever (26) is located in the region of the fixed bearing point (28).

9. Clamping device according to one of claims 4, 5 or 6, characterised in that for the resilient rotary loading of the rotary lever (26) the latter is constructed as a leaf spring (41), at least in its region near the pivot on the fixed bearing point (28), fixedly connected at its free end to the housing (1) of the spring-loading means.

10. Clamping device according to claim 6, characterised in that the force sensor has a rubber cushion (43) surrounded on all sides by walls, one wall (44) being coupled in the direction of compression of the rubber cushion (43) to the rotary lever (26), and a sensor rod (46) of a pressure sensor (47) abuts the rubber cushion (43), its contact surface being smaller than the surface of the one wall (44).

11. Clamping device according to one or more of the above claims, characterised in that the rotary lever (26) is of U-shaped design and is arranged to project transversely over the actuation rod (6).

## Revendications

1. Dispositif électromécanique de serrage pour des freins à friction (13) de véhicules, notamment de véhicules sur rails, comportant un accumulateur à ressort axial (2), qui peut être armé au moyen d'un moteur électrique (24) par l'intermédiaire d'un mécanisme (14) convertissant un mouvement de rotation en un déplacement axial, et une pince de freinage (10) pouvant être serrée par la force de cet accumulateur à ressort et comportant deux leviers (7;8), l'extrémité d'actionnement d'un levier (7) de la pince de freinage étant accouplée à un poussoir d'actionnement (6) de l'accumulateur à ressort (2), et l'extrémité d'actionnement du second levier (8) de la pince de freinage pouvant prendre appui contre un palier fixe, et comportant un dispositif de mesure pour la force de serrage appliquée au frein à friction (13),
caractérisé en ce
que l'extrémité d'actionnement du second levier (8) de la pince de freinage est articulée sur un levier pivotant (26), qui s'étend dans un plan coupant sensiblement à angle droit le plan de la pince de freinage (10) et qui est retenu, dans une position décalée par rapport à cette articulation (27), en un point d'appui fixe (28), de manière à pouvoir tourner de façon limitée autour d'un axe situé au moins approximativement dans le plan de ce levier et perpendiculaire à sa direction d'extension longitudinale, le levier pivotant étant chargé élastiquement en rotation, dans un sens de rotation opposé au couple qui peut lui être appliqué par le levier (8) de la pince de freinage sous l'effet de la force de serrage, et étant couplé, en un point décalé par rapport au point d'appui (28), à un dispositif de mesure (33,34) qui délivre un signal lors de la rotation du levier pivotant autour du point d'appui (28).

2. Dispositif de serrage selon la revendication 1, caractérisé en ce que l'articulation (27) du levier (8) de la pince de freinage est située dans la région médiane de la dimension longitudinale du levier pivotant (26), le point d'appui fixe (28) est situé à proximité d'une extremité de ce levier et le point de couplage du dispositif de mesure (33,34) est situé à proximité de l'autre extrémité de ce levier.

3. Dispositif de serrage selon la revendication 2, caractérisé en ce que des butées fixes respectives (31;32), qui limitent des mouvements de rotation autour du point d'appui (28), sont placées en vis-à-vis du levier pivotant (26), de part et d'autre de ce dernier, dans des positions décalées par rapport au point d'appui (28), en ce que les butées (31;32) sont situées dans la zone comprise entre l'articulation (27) du levier (8) de la pince de freinage et l'autre extrémité du levier pivotant (26), et en ce que le point d'appui fixe (28) et les butées (31;32) sont disposés sur le boîtier (1) de l'accumulateur à ressort (2).

4. Dispositif de serrage selon la revendication 3, caractérisé en ce que, dans le cas de la réalisation de ce dispositif en deux étages, le dispositif de mesure est réalisé sous la forme d'un commutateur (34) qui est commuté lors de la rotation du levier pivotant (26) à l'encontre de sa charge élastique d'entraînement en rotation.

5. Dispositif de serrage selon la revendication 2 ou 3, caractérisé en ce que, dans le cas de la réalisation de ce dispositif en quatre étages ou analogue, le dispositif de mesure est réalisé sous la forme d'un détecteur de course, la charge élastique d'entraînement en rotation étant utilisée comme force d'un ressort de mesure.

6. Dispositif de serrage selon la revendication 2 ou 3, caractérisé en ce que, dans le cas de la réalisation de ce dispositif en quatre étages ou analogue, le dispositif de mesure est réalisé sous la forme d'un capteur dynamométrique, qui applique la charge élastique d'entraînement en rotation sur le levier pivotant (26), avec une intensité produisant une compensation du couple exercé par le levier (8) de la pince de freinage.

7. Dispositif de serrage selon l'une des revendications 4, 5 ou 6, caractérisé en ce que, pour la charge élastique d'entraînement en rotation du levier pivotant (26), un ressort (30) est comprimé à peu près dans la région des butées (31;32) entre le levier pivotant (26) et un contre-appui (29) fixé sur le boîtier (1) de l'accumulateur à ressort (2).

8. Dispositif de serrage selon l'une des revendications 4, 5 ou 6, caractérisé en ce que pour la charge élastique d'entraînement en rotation du levier pivotant (26), un ressort de torsion (39), qui charge le levier pivotant (26), est disposé dans la zone du point d'appui fixe (28).

9. Dispositif de serrage selon l'une des revendications 4, 5 ou 6, caractérisé en ce que pour la charge élastique d'entraînement en rotation du levier pivotant (26), ce dernier est réalisé, au moins dans sa partie proche de son articulation au point d'appui fixe (28), sous la forme d'un ressort à lame (41) relié de façon fixe, à son extrémité libre, au boîtier (1) de l'accumulateur à ressort (2).

10. Dispositif de serrage selon la revendication 6, caractérisé en ce que le capteur dynamométrique possède un coussin en caoutchouc (43), qui est entouré de tous côtés par des parois, une paroi (44) étant couplée au levier pivotant (26) dans la direction de compression du coussin en caoutchouc (43), alors que sur le coussin en caoutchouc (43) est appliqué un poussoir de palpage (46) d'un capteur de pression (47), dont la surface d'application est plus petite que la surface de ladite paroi (44).

11. Dispositif de serrage selon une ou plusieurs des revendications précédentes, caractérisé en ce que le levier pivotant (26) a une configuration en forme de U et est disposé de manière à enjamber transversalement le poussoir d'actionnement (6).
